# EUROPÄISCHE PATENTSCHRIFT

(11) **EP 0 672 222 B1**
(45) Veröffentlichungstag und Bekanntmachung des Hinweises auf die Patenterteilung: **18.09.1996**
(21) Anmeldenummer: 94901907.9
(22) Anmeldetag: 29.11.1993
(51) Int. Cl.: F04C 27/00

(54) **VERFAHREN UND VORRICHTUNG ZUR VERRINGERUNG DES SPALTS ZWISCHEN EINEM STATISCHEN TEIL UND EINEM BEWEGLICHEN TEIL**
PROCESS AND DEVICE FOR REDUCING THE GAP BETWEEN A STATIC PART AND A MOVABLE PART
PROCEDE ET DISPOSITIF DE REDUCTION DE L'ECARTEMENT ENTRE UNE PIECE STATIQUE ET UNE PIECE MOBILE

(30) Priorität: 03.12.1992 LU 88194
(43) Veröffentlichungstag der Anmeldung: 20.09.1995
(73) Patentinhaber: EUROPÄISCHE ATOMGEMEINSCHAFT (EURATOM), L-2920 Luxembourg (LU)
(72) Erfinder: DINNER, Paul J., Mississauga, Ontario L5J 1K3 (CA)
(74) Vertreter: Weinmiller, Jürgen
(86) Internationale Anmeldenummer: EP9303341
(87) Internationale Veröffentlichungsnummer: WO9412792

(56) Entgegenhaltungen:
- EP-A- 0 451 669
- EP-A- 0 493 315
- DE-A- 3 936 429
- US-A- 3 836 156
- PATENT ABSTRACTS OF JAPAN vol. 7, no. 145 (M-224)(1290) 24. Juni 1983 & JP,A,58 057 100 (HITACHI SEISAKUSHO K.K.) 5. April 1983

## Beschreibung

Die Erfindung bezieht sich auf eine Vorrichtung zur Verringerung des Spalts zwischen einem statischen Teil und einem beweglichen Teil in einer bei Kryotemperatur zu betreibenden Anlage.

Da die Gasdichte umgekehrt mit der Temperatur variiert, wäre es wünschenswert, über mechanische Vakuumpumpen zu verfügen, die in der Lage sind, bei Tiefsttemperaturen, auch Kryotemperaturen genannt, betrieben zu werden, da dies zu wesentlich größeren Durchsätzen für eine Pumpe einer gegebenen Größe führen würde. Beispielsweise ergibt sich durch Abkühlung eines Gases von 300 K auf 20 K eine Verdichtung des Gases um einen Faktor 15.

Mechanische Pumpen für Hochvakuumanwendungen erfordern sehr geringe Abstände zwischen den beweglichen und den statischen Teilen, um die Rückströmung von Gas in der Pumpe zu reduzieren. Soll die Pumpe bei niedriger Temperatur betrieben werden, dann müssen diese Abstände extrem klein sein (beispielsweise zwischen 1 mm und 0,1 mm), da die Rückströmung durch die geringe Gasviskosität bei den niedrigen Temperaturen verstärkt wird und da die kurze freie Weglänge bei den niedrigen Temperaturen zu einer laminaren Strömung durch den Spalt zwischen statischem Teil und beweglichem Teil führen kann. Außerdem treten größere Massenflüsse aufgrund der erhöhten Dichte auf.

Andererseits ist aber gerade bei Kryotemperaturen die Einhaltung enger Abstände zwischen statischen und beweglichen Teilen durch die unterschiedliche Wärmeausdehnung der verschiedenen Bauteile der Pumpe während des Abkühlens oder Erwärmens erschwert. So wäre es günstig, eine Konstruktion zu finden, die bei Temperaturwechseln angemessene Abstände und im Kryobetrieb geringstmögliche Abstände gewährleistet. In jedem Fall muß aber vermieden werden, daß die beweglichen und die statischen Teile sich berühren und somit beschädigen.

Aus der Druckschrift US-A-3 836 156 ist ein Verfahren zur Verringerung des Spalts zwischen einem statischen und einem beweglichen Teil bekannt, bei dem eines der Teile mit einem metallischen Abriebbelag versehen ist, der bei einer Temperatur knapp über der Betriebstemperatur schmilzt, d.h. schon bei der geringsten Temperaturerhöhung aufgrund eines reibenden Kontakts der beiden Teile. Dieses Verfahren kann jedoch keine variablen Spaltbreiten (z.B. aufgrund von Wärmedehnungen) verringern.

Weiter wird in der EP-A-0 451 669 vorgeschlagen, die Spaltflächen mit einem viskosen Stoff zu beschichten, der beim Einlaufen durch das bewegliche Teil abgeschliffen wird.

Aufgabe der Erfindung ist es also, eine Vorrichtung zur Verringerung des Spalts zwischen einem statischen Teil und einem beweglichen Teil in einer bei Kryotemperatur zu betreibenden Anlage anzugeben, die trotz der unterschiedlichen Wärmeausdehnungen beim Abkühlen oder Erwärmen der Anlage beim Kryobetrieb sehr geringe Spaltbreiten zwischen den beweglichen und den statischen Teilen gewährleistet, wenn die Kryotemperatur erreicht ist. Diese Aufgabe wird in der erfindungsgemäßen Vorrichtung dadurch gelöst, daß in der Wand eines der Teile entlang des Spalts ein Kühlkanal angebracht ist, der in einen Kreislauf für ein Kryokühlfluid eingefügt ist, und daß Mittel zum Einspeisen eines mit den Betriebsmitteln der Anlage kompatiblen Gases in den Spaltbereich vorgesehen sind, dessen Verfestigungstemperatur oberhalb der Temperatur des Kryokühlfluids liegt.

Die Erfindung bezieht sich auch auf ein Verfahren zum Betrieb einer derartigen Vorrichtung, das im Anspruch 2 definiert ist. Bezüglich von Merkmalen bevorzugter Ausführungsformen der Erfindung wird auf die weiteren Ansprüche verwiesen.

Nachfolgend wird die Erfindung mit Hilfe bevorzugter Ausführungsbeispiele anhand der Figuren näher erläutert.

Figur 1 zeigt schematisch im Schnitt eine Vorrichtung gemäß der Erfindung.

Figur 2 zeigt die Anwendung der Vorrichtung gemäß Figur 1 auf eine Holweckpumpe.

Figur 3 zeigt die Anwendung einer Vorrichtung gemäß Figur 1 auf ein Ventil mit zwei Dichtlinien.

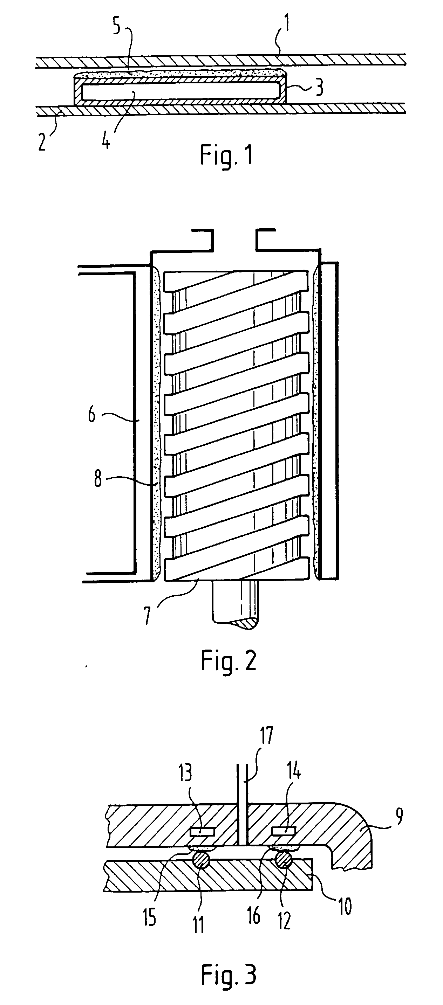

In Figur 1 ist ein begrenzter Bereich der Wand 1 eines Rotors einer Vakuumpumpe dargestellt, die gegenüber einer Wand 2 eines Stators rotiert. Die Drehachse verläuft beispielsweise senkrecht zur Zeichenebene oberhalb des dargestellten Bereichs. Es handelt sich beispielsweise um eine Molekularpumpe mit einer Spiralrippe 3, die sich spiralförmig entlang der Statorwand 2 von der Einlaßseite zur Gasauslaßseite entlangwindet. Entscheidend für die Verringerung der Rückströmung und damit für die Pumpleistung ist der Abstand d zwischen der Rippe 3 und der glatten Rotorwand 1. Erfindungsgemäß wird dieser Spalt verringert durch eine Eisschicht 5 aus einem mit den zu pumpenden Gasen kompatiblen und kondensierbaren Gas, die im Bereich der Rippe 3 auf diese aufgebracht wird. Hierzu ist die Rippe 3 hohl ausgebildet und stellt einen Kühlkanal 4 dar, in dem ein Kühlfluid zirkulieren kann. Vor der eigentlichen Inbetriebnahme der Pumpe wird Kühlfluid in diesen Kanal 4 eingespeist, und zugleich wird in den Pumpraum der Pumpe ein geeignetes Gas, z.B. CO₂, gebracht, das an den kalten Flächen der Rippe 3 bevorzugt kondensiert und dann eine Eisschicht 5 bildet. Die Eiskonsistenz kann durch die Wahl der Gefriertemperaturen den Bedürfnissen angepaßt werden. Die Dicke der Eisschicht wird durch die Menge des eingespeisten Gases bestimmt, wobei durchaus toleriert werden kann, daß der Rotor die Eisschicht beim Anlaufen leicht abhobelt. So ergibt sich eine kontrollierte Verengung des Spalts und eine selektive Anlagerung des Eises auf den Kühlkanal aufgrund der thermischen Trägheit der übrigen Teile der Anlage.

Kohlendioxid CO₂ eignet sich als eisbildendes Gas beispielsweise zum Pumpen von leichten Gasen, die insbesondere Helium und Wasserstoffisotope enthalten, so daß dann die erfindungsgemäße Vorrichtung insbesondere für die Behandlung von aus einem Fusionsreaktor kommenden Gasen geeignet ist. Durch die markante Verringerung des Spalts zwischen dem Rotor und dem Stator wird eine deutliche Erhöhung der Pumpleistung bei gleichzeitiger Absenkung des Endvakuums erreicht. Verglichen mit einer Pumpe ohne die erfindungsgemäßen Maßnahmen verringern sich so die Pumpengröße, das Gewicht, die gespeicherte Energie und die Verlustwärme. Die Vorrichtung ist unempfindlich gegen ggf. angesaugte Staubkörner, und das CO₂-Eis erzeugt praktisch keine Aktivierungsprodukte aufgrund von Gamma- oder Neutronenstrahlung, etwa falls strahlende Isotope wie Tritium gepumpt werden sollen. Da der Dampfdruck von CO₂ bei 20 K sehr niedrig ist (kleiner als 10⁻¹²mbar), ist die Eisschicht sehr stabil.

Übliche Dichtmaterialien widerstehen nicht sehr lange ungünstigen Bedingungen, wie sie durch Kernstrahlung oder Staub oder eine Wechselwirkung mit dem zu pumpenden Gas hervorgerufen werden. Daher verschlechtern sich die Pumpeigenschaften bekannter Pumpen unter solchen Bedingungen schnell und erfordern eine teure Wartung. Im Gegensatz dazu kann die Eisschicht in der erfindungsgemäßen Vorrichtung leicht erneuert werden und paßt sich im Betrieb von selbst optimal der Form des Spaltes an. Man kann die Eisschicht gewissermaßen als eine Schmierschicht betrachten, die in Kontakt mit den Gegenwand oberflächlich abschmilzt.

Der "Spalt" zwischen dem beweglichen und dem statischen oder stationären Teil einer Pumpe kann sich über die ganze Höhe einer zylindrischen Pumpenwand erstrecken, wie dies z.B. bei der Spiro-Molekularpumpe nach Holweck der Fall ist, die in Figur 2 gezeigt ist. Hier ist die Wand des Stators 6 doppelwandig ausgebildet und wird von einem Kryokühlmittel durchflossen, so da sich beim Einspeisen eines kondensierbaren Gases in den Bereich zwischen Stator und Rotor 7 eine Eisschicht 8 an der ganzen Statorinnenwand ausbildet.

Die Erfindung ist natürlich nicht auf die erwähnte Molekular-Pumpe beschränkt, sondern bei allen Pumpen anwendbar, die Gase bei sehr niedrigen Temperaturen pumpen sollen und bei denen zwischen Rotor und Stator ein sehr geringer Abstand herrschen soll. Aber auch als Dichtung zwischen relativ zueinander beweglichen Teilen anderer Bauteile von Kryoanlagen ist die erfindungsgemäße Vorrichtung verwendbar, beispielsweise bei Wellendurchführungen und bei Ventilen. Im letzteren Fall kann die erfindungsgemäße Vorrichtung als eine verbrauchbare Dichtung des Ventilsitzes betrachtet werden.

In Figur 3 ist ein Querschnitt durch einen Teil eines Ventils gezeigt, an dem die erfindungsgemäße Vorrichtung ebenfalls Anwendung finden kann. Ein Ventilgehäuse 9 besitzt eine Ventilöffnung, die man sich links von dem dargestellten Ventilteil vorstellen muß. Ein scheibenförmiges Verschlußorgan 10 liegt bei geschlossenem Ventil über zwei die Öffnung umgebende Dichtlinien auf dem Ventilkörper auf und wird durch nicht dargestellte Mittel betätigt. Entlang der Dichtlinien sind in das Verschlußorgan (oder das Ventilgehäuse) Dichtungsringe 11 und 12, z.B. aus Metall, in Nuten eingesetzt, und diesen gegenüber verlaufen im Ventilgehäuse (oder dem Verschlußorgan) Kühlkanäle 13 und 14, die ganz gezielt zu einer CO₂-Eisschicht 15, 16 in Höhe der Dichtlinien führen, wenn CO₂-Gas vor den gekühlten Bereichen vorbeigeleitet wird. Zwischen den beiden Dichtlinien kann ein Anschluß 17 für eine Sicherheitsgasquelle oder eine Vakuumpumpe vorgesehen sein.

Während des Schließens des Ventils wird die Eisschicht komprimiert und bildet dadurch eine wirksame Dichtung. Hierzu empfiehlt es sich, die Eisschicht durch die geeignete Wahl der Abkühlungsbedingungen (Geschwindigkeit und Anfangstemperatur, bei der das die Eisschicht bildende Gas eingespeist wird) weniger kompakt, d.h. poröser zu gestalten, so daß sie beim Schließen des Ventils leicht zerquetscht wird. Die Eisschicht wird in jedem Ventilzyklus erneuert, um Schäden des Ventilkörpers durch Staub zu verhindern.

Anstatt CO₂, wie in Anwendung auf aus einem Fusionsreaktor kommende Gase, könnte auch ein anderes eisbildendes Gas für bestimmte Anwendungsfälle verwendet werden, z.B. CO, N₂ und Ar, sofern keine Wechselwirkungen zwischen diesen Stoffen und den in der Anlage behandelten Gasen zu befürchten sind.

Im Rahmen der Erfindung kann man die Kühlkanäle auch in dem beweglichen Teil vorsehen, wenn sich die konstruktiven Probleme der Zu- und Abfuhr des Kryo-Kühlmittels im konkreten Fall lösen lassen.

## Patentansprüche

1. Vorrichtung zur Verringerung des Spalts zwischen einem statischen Teil (2) und einem beweglichen Teil (1) in einer bei Kryotemperatur zu betreibenden Anlage, dadurch gekennzeichnet, daß in der Wand eines der Teile (1, 2) entlang des Spalts ein Kryo-Kühlkanal (4) eingefügt ist, und daß Mittel zum Einspeisen eines gegenüber den Betriebsmitteln der Anlage kompatiblen und kondensierbaren Gases in den Spaltbereich vorgesehen sind, dessen Verfestigungstemperatur oberhalb der Temperatur des Kryokühlfluids liegt.

2. Verfahren zur Verringerung des Spalts zwischen einem statischen Teil (2) und einem beweglichen Teil (1) unter Verwendung einer Vorrichtung gemäß Anspruch 1, dadurch gekennzeichnet, daß zuerst und vorübergehend ein mit den Betriebsmitteln der Anlage kompatibles Gas in den Spaltbereich geleitet wird, das aufgrund des den Kühlkanal durchfließenden Kryokühlfluids sich dort als Kondensat niederschlägt und zu Eis wird, und daß während des Betriebs der Anlage zumindest im Spaltbereich eine Temperatur unterhalb der Schmelztemperatur dieses Eises aufrechterhalten wird.

3. Verfahren nach Anspruch 2, dadurch gekennzeichnet, daß im Fall von leichten Gasen wie Wasserstoff und Helium als Betriebsmittel der Anlage für das kondensierte Gas Kohlendioxid gewählt wird.

4. Anwendung des Verfahrens gemäß einem der Ansprüche 2 und 3 auf eine mechanische Vakuumpumpe zur Verringerung des Spalts zwischen Stator und Rotor.

5. Anwendung des Verfahrens gemäß einem der Ansprüche 2 und 3 auf ein Ventil zur Abdichtung des Ventilsitzes.

## Claims

1. A device for reducing the gap between a static part (2) and a movable part (1) in an installation which is to be operated at cryo temperature, characterized in that a cryo coolant channel (4) is inserted in the wall of one of the parts (1, 2) and along the gap, and that means are provided for injecting into the gap a gas which is compatible with the operative environment of the installation, which can be condensated and whose liquid-solid conversion temperature is situated above the temperature of the coolant fluid.

2. A method for reducing the gap between a static part and a movable part (1) which applies the device according to claim 1, characterized in that in an introductory and temporary step, a gas is fed into the gap, which is compatible with the operative environment of the installation and which condensates in the gap and becomes ice due to the action of the coolant fluid in the coolant channel, and that during the operation of the installation, a temperature below the melting temperature of this ice is maintained at least in the zone of the gap.

3. A method according to claim 2, characterized in that in case the installation is operated with light gases such as hydrogen and helium, the condensating gas is constituted by carbon dioxide.

4. The application of the method according to one of claims 2 and 3 to a mechanical vacuum pump for reducing the gap between stator and rotor.

5. The application of the method according to one of claims 2 and 3 to a valve for sealing the valve seat.

## Revendications

1. Dispositif pour réduire le jeu d'interstice entre une pièce statique (2) et une pièce mobile (1) dans une installation fonctionnant à des températures cryogéniques, caractérisé en ce qu'on dispose dans la paroi d'une des pièces (1, 2) en regard de l'interstice un conduit de refroidissement cryogénique (4) et qu'on prévoit des moyens pour injecter dans l'interstice un gaz condensable et compatible avec l'environnement opératoire de l'installation dont la température de solidification est supérieure à la température dudit fluide de refroidissement cryogénique.

2. Procédé pour la diminution du jeu d'interstice entre une pièce statique (2) et une pièce mobile (1) en utilisant un dispositif selon la revendication 1, caractérisé en ce que d'abord et temporairement, un gaz compatible avec l'environnement opératoire de l'installation est introduit dans ledit interstice, qui, dû au fluide de refroidissement cryogénique parcourant le conduit de refroidissement, s'y dépose en tant que condensé et devient de la glace, et que lors du fonctionnement de l'installation, une température au-dessous de la température de fusion de cette glace est maintenue au moins dans ledit interstice.

3. Procédé selon la revendication 2, caractérisé par le fait qu'en présence de gaz légers comme l'hydrogène et l'hélium dans l'environnement opératoire, on choisit le dioxyde de carbone en tant que gaz condensé.

4. Application du procédé selon l'une des revendications 2 et 3 à une pompe à vide mécanique en vue de la diminution du jeu entre stator et rotor.

5. Application du procédé selon l'une des revendications 2 et 3 à une soupape pour établir l'étanchéité du siège de soupape.
